# EUROPÄISCHE PATENTANMELDUNG

(11) **EP 3 115 804 A1**
(43) Veröffentlichungstag der Anmeldung: **11.01.2017**
(21) Anmeldenummer: 16178215.6
(22) Anmeldetag: 06.07.2016
(51) Int. Cl.: G01S 7/40, G01S 13/93

(54) **PRÜFSTAND ZUM TEST EINES ABSTANDSRADARGERÄTS ZUR ENTFERNUNGS- UND GESCHWINDIGKEITSBESTIMMUNG VON HINDERNISSEN**

(30) Priorität: 08.07.2015 DE 102015111014
(71) Anmelder: dSPACE digital signal processing and control engineering GmbH, 33102 Paderborn (DE)
(72) Erfinder: Grascher, Carsten, 33100 Paderborn (DE); Lohöfener, Albrecht, 33098 Paderborn (DE); Schütte, Frank, 34414 Warburg (DE); Rozmann, Michael, 82223 Eichenau (DE)

(57) **Zusammenfassung**

Prüfstand zum Test eines Abstandsradargeräts zur Entfernungs- und Geschwindigkeitsbestimmung von Hindernissen, umfassend eine Radaremulationseinrichtung mit mindestens einer Radarantenne und einer Computereinheit mit einem Umgebungsmodell, wobei das Umgebungsmodell Daten (x,v) mindestens eines Hindernisses mit einer relativen Position und Geschwindigkeit zum Abstandsradargerät umfasst, wobei die Radaremulationseinrichtung nach Empfang eines Abtastradarsignals von dem Abstandsradargerät ein geeignetes Reflektionsradarsignal basierend auf der durch das Umgebungsmodell vorgegebenen relativen Position und Geschwindigkeit zumindest teilweise in Richtung des Abstandsradargeräts aussendet, sodass das Abstandsradargerät ein Hindernis mit der vorgegebenen relativen Position und Geschwindigkeit detektiert, dadurch gekennzeichnet, dass sich die Radaremulationseinrichtung über einen Winkelbereich vor dem Abstandsradargerät erstreckt, so dass das Hindernis mit relativer Position und Geschwindigkeit in diesem Winkelbereich mit voneinander unterscheidbaren Winkeln simuliert werden kann und dass die Radaremulationseinrichtung eine Vielzahl von ortsfesten Radarantennen umfasst, die über den Winkelbereich verteilt sind.

## Beschreibung

Die Erfindung betrifft einen Prüfstand zum Test eines Abstandsradargeräts zur Entfernungs- und Geschwindigkeitsbestimmung von Hindernissen, umfassend eine Radaremulationseinrichtung mit mindestens einer Radarantenne und einer Computereinheit mit einem Umgebungsmodell, wobei das Umgebungsmodell Daten mindestens eines Hindernisses mit einer relativen Position und Geschwindigkeit zum Abstandsradargerät umfasst, wobei die Radaremulationseinrichtung nach Empfang eines Abtastradarsignals von dem Abstandsradargerät ein geeignetes Reflektionsradarsignal basierend auf der durch das Umgebungsmodell vorgegebenen relativen Position und Geschwindigkeit zumindest teilweise in Richtung des Abstandsradargeräts aussendet, so dass das Abstandsradargerät ein Hindernis mit der vorgegebenen relativen Position und Geschwindigkeit detektiert und dass die Radaremulationseinrichtung eine Vielzahl von ortsfesten Radarantennen umfasst, die über den Winkelbereich verteilt sind.

Prüfstände nach dem Oberbegriff des ersten Anspruchs werden häufig dafür eingesetzt, um einzelne Komponenten aus Kraftfahrzeugen und Steuereinrichtungen von Kraftfahrzeugen im Labor unter realen physikalischen Bedingungen zu testen. Hierfür werden die Daten und Messwerte, die die zu testende Komponente benötigt, durch ein geeignetes Modell des restlichen Fahrzeugs und dessen Umgebung - hier das Umgebungsmodell - berechnet und mittels geeigneter Mittel in reale physikalische Größen umgesetzt.

Ein Umgebungsmodell wird im Zusammenhang mit der vorliegenden Erfindung als ein Modell der Umgebung verstanden, in der sich das Fahrzeugmodell, angeschlossen an die zu testende Komponente, bewegt und mit der es interagiert. Das Umgebungsmodell ist zum Beispiel eine dreidimensionale Abbildung eines Straßensystems mit einer virtuellen Teststrecke, und umfasst außerdem weitere bewegliche Verkehrsteilnehmer (Fahrzeuge, Fußgänger) und unbewegliche Objekte wie Leitplanken sowie sonstige Hindernisse. Das Umgebungsmodell kann jedoch in seiner simpelsten Form ein einziges Fahrzeug umfassen und dessen relative Geschwindigkeit und Position definieren.

Unter einem Abstandsradargerät wird in der vorliegenden Erfindung ein elektronisches Steuergerät mit wenigstens einer Radarantenne zum Senden und Empfangen von Radarsignalen zum Einbau in ein Kraftfahrzeug verstanden. Solche Abstandsradargeräte werden zum Beispiel eingesetzt, um Messdaten aus der Fahrzeugumgebung für Notbrems- (AEB - Automatic Emergency Brake), Abstandregel- (ACC - Adaptive Cruise Control) und Spurwechselassistenten (LCS - Lane Change Support) zu erhalten. Diese sicherheitsrelevanten Regelautomaten benötigen Echtzeitinformationen über Position und Geschwindigkeit herannahender Hindernisse wie zum Beispiel Verkehrsteilnehmer oder ortsfeste Objekte in der Fahrzeugumgebung, um rechtzeitig in die Fahrzeugführung einzugreifen und Kollisionen zu vermeiden.

Typische Abstandsradargeräte umfassen eine oder mehrere Radarantennen, eine Logik zum Messen und Auswerten detektierter Radarsignale und Schnittstellen zu anderen Steuergeräten des Fahrzeugs. Das Radargerät sendet geeignete elektromagnetische Wellen im Radiofrequenzbereich - hier das Abtastradarsignal - in eine bestimmte Richtung seiner Umgebung ab und wartet auf ein reflektiertes Echosignal - hier das Reflektionsradarsignal. Die Erzeugung solcher Radarwellen ist hinlänglich bekannt, unter den verwendeten Verfahren sind das frequenzmodulierte Dauerstrichradar und Verfahren, die auf Pulskompression basieren. Wichtig ist nur das Verständnis, dass das an einem Hindernis reflektierte Radarsignal durch Auswertung von Pulslaufzeit und Frequenzverschiebung (Dopplereffekt) Rückschluss auf die relative Position und Geschwindigkeit bezüglich des Empfängers zulässt. Das Abtastradargerät tastet seine Umgebung in Winkelschritten ab und erhält so räumlich aufgelöste Informationen über Position und Geschwindigkeit der umgebenden Hindernisse. Abstandsradargeräte können an den äußeren Fahrzeuggrenzen, zum Beispiel in der Kühlerabdeckung installiert sein, aber auch ein Einbau innerhalb der Fahrzeuggrenzen, zum Beispiel im oberen Teil der Windschutzscheibe, ist denkbar.

Unter einer Radaremulationseinrichtung wird hier ein Gerät mit mindestens einer Radarantenne verstanden, die das Abtastradarsignal eines Abstandsradargeräts empfängt und infolgedessen basierend auf vorgegebenen relativen Positions- und Geschwindigkeitsdaten ein Reflektionsradarsignal erzeugt, das durch das Abstandsradargerät empfangen wird und dieses ein Hindernis mit den vorgegebenen relativen Positions- und Geschwindigkeitsdaten erkennen lässt. Eine solche Einrichtung ist aus dem Stand der Technik bekannt und zum Beispiel in der Produktbroschüre des Rohde&Schwarz ARTS9510 (zu finden unter https://www.rohde-schwarz.com/en/product/arts9510-productstartpage 63493-114114.html , abgerufen 2015) beschrieben. Hier sind eine einzelne Radarantenne, auch realisiert durch getrennte Sende- und Empfangsantennen, und eine Emulationselektronik beschrieben, mit der die Emulation eines einzelnen Hindernisses mit vorgegebenen relativen Positions- und Geschwindigkeitsdaten ermöglicht wird.

Diese aus dem Stand der Technik bekannten Radaremulationseinrichtungen und Prüfstände unter Verwendung solcher Radaremulationseinrichtungen sind nicht geeignet, Umgebungssituationen realitätsnah abzubilden.

Aufgabe der vorliegenden Erfindung ist es, den eingangs beschriebenen Prüfstand so weiterzubilden, dass realitätsnahe Umgebungssituationen simulierbar sind.

Der Erfindung liegt nun die Erkenntnis zu Grunde, dass bei dem Test eines Abstandsradargeräts in komplexen Testszenarien mit einem dreidimensionalen Umgebungsmodell die Detektierung von dreidimensionalen, ausgedehnten Objekten erforderlich ist um eine realistische Beurteilung der Funktionalität des zu testenden Abstandsradargeräts treffen zu können.

Die zuvor hergeleitete Aufgabe wird durch einen Prüfstand mit den Merkmalen des kennzeichnenden Teils des Patentanspruchs 1 gelöst. Vorteilhafte Ausgestaltungen der Erfindung sind Gegenstand von abhängigen Unteransprüchen.

Gemäß dem Gegenstand der Erfindung wird ein Prüfstand zum Test eines Abstandsradargeräts zur Entfernungs- und Geschwindigkeitsbestimmung von Hindernissen vorgeschlagen, umfassend eine Radaremulationseinrichtung mit mindestens einer Radarantenne und einer Computereinheit mit einem Umgebungsmodell, wobei das Umgebungsmodell Daten mindestens eines Hindernisses mit einer relativen Position und Geschwindigkeit zum Abstandsradargerät umfasst, wobei die Radaremulationseinrichtung nach Empfang eines Abtastradarsignals von dem Abstandsradargerät ein geeignetes Reflektionsradarsignal basierend auf der durch das Umgebungsmodell vorgegebenen relativen Position und Geschwindigkeit zumindest teilweise in Richtung des Abstandsradargeräts aussendet, sodass das Abstandsradargerät ein Hindernis mit der vorgegebenen relativen Position und Geschwindigkeit detektiert.

Der erfindungsgemäße Prüfstand ist dadurch gekennzeichnet, dass sich die Radaremulationseinrichtung über einen Winkelbereich vor dem Abstandsradargerät erstreckt, so dass das Hindernis mit relativer Position und Geschwindigkeit in diesem Winkelbereich mit voneinander unterscheidbaren Winkeln simuliert werden kann und dadurch, dass die Radaremulationseinrichtung eine Vielzahl von ortsfesten Radarantennen umfasst, die über den Winkelbereich verteilt sind.

In einer Weiterbildung ist der Prüfstand so ausgestaltet, dass der azimutale Anteil der Position des simulierten Hindernisses durch die azimutale Position und der vertikale Anteil der Position des simulierten Hindernisses durch die vertikale Position der das Reflektionsradarsignal aussendenden Radarantenne der Radaremulationseinrichtung festgelegt werden. Bewegt sich das zu simulierende Objekt, wechselt daher die Radarantenne, die für die Aussendung des Reflektionsradarsignals zuständig ist. Obwohl die jeweilige empfangende Radarantenne auch das entsprechende Reflektionsradarsignal aussenden kann, kann die Position der für den Empfang des Abtastradarsignals zuständigen Radarantenne im gewissen Rahmen unabhängig gewählt werden, soweit es das Abstandsradargerät unterstützt. Diese Prüfstandsanordnung ist für Abstandsradargeräte geeignet, die das Abstandsradarsignal nicht lateral ablenken. Bei Empfang eines Reflektionsradarsignals detektieren diese Abstandsradargeräte ein Hindernis in der Richtung, aus der das Reflektionsradarsignal empfangen wird. Es muss lediglich sichergestellt werden, dass das Abtastradarsignal für die für den Empfang des Abtastradarsignals zuständige Radarantenne detektierbar ist, die genaue Position dieser Radarantenne ist dann unerheblich.

In einer Weiterbildung ist der Prüfstand so ausgestaltet, dass der azimutale Anteil der Position des simulierten Hindernisses durch die azimutale Position und der vertikale Anteil der Position des simulierten Hindernisses durch die vertikale Position der detektierenden Radarantenne der Radaremulationseinrichtung festgelegt werden. Bewegt sich das zu simulierende Objekt in azimutaler Richtung, wechselt daher die Radarantenne, die für den Empfang des Abtastradarsignals des Reflektionsradarsignals zuständig ist. Obwohl diese jeweilige empfangende Radarantenne auch das entsprechende Reflektionsradarsignal aussenden kann, kann die Position der für das Aussenden des Reflektionsradarsignals zuständigen Radarantenne in gewissem Rahmen unabhängig gewählt werden, soweit es das Abstandsradargerät unterstützt. Diese Prüfstandsanordnung ist für Abstandsradargeräte geeignet, die das Abtastradarsignal lateral ablenken und bei nachfolgendem Empfang eines Reflektionsradarsignals ein Hindernis in der Richtung detektieren, in die das Abtastradarsignal ausgesendet wurde. Es muss lediglich sichergestellt werden, dass das Abstandsradargerät das Reflektionsradarsignal empfangen kann, die genaue Position der Radarantenne die das Reflektionsradarsignal aussendet ist dann unerheblich.

In einer weiteren Ausführungsform ist der Prüfstand mit einer Anzahl von Radarantennen in einem einer vorgegebenen Winkelauflösung entsprechenden gegenseitigen Winkelabstand ausgestattet. Eine hohe Winkelauflösung ermöglicht, mit dem Prüfstand auch komplexe durch das Umgebungsmodell vorgegebene Situationen zu simulieren. So kann das simulierte Hindernis beispielsweise ein charakteristisches Reflektionsmuster aufweisen, anhand dessen das Abstandsradargerät verschiedene Verkehrsteilnehmer, beispielsweise Personenkraftwagen und Fußgänger, voneinander unterscheidet.

In einer Weiterbildung ist der Prüfstand so ausgestaltet, dass die Radarantennen auf einer geradlinig verlaufenden Kontur angeordnet sind. Eine geradlinige Kontur ist beispielsweise eine Schiene, auf der die Radarantennen nebeneinander angeordnet sind. Ein weiteres Beispiel ist eine ebene Fläche, die mit Radarantennen in einer zweidimensionalen Verteilung bestückt ist und damit einen zweidimensionalen Winkelbereich abdecken.

In einer anderen Ausführungsform ist der Prüfstand so ausgestaltet, dass die Radarantennen auf einer konkaven Kontur mit Öffnung in Richtung des Abstandsradargeräts angeordnet sind. Für diese Anordnung kann beispielsweise vorgesehen sein, die Radarantenne auf einer gebogenen Schiene anzuordnen. Ein weiteres Beispiel ist die Anbringung einer Vielzahl von Radarantennen auf der inneren Kontur eines hohlen Ellipsoids, beispielsweise einer Teilkugel, wobei die Öffnung in Richtung des zu testenden Abstandsradargerätes weist.

In einer Weiterbildung ist der Prüfstand so ausgestaltet, dass eine erste Radarantenne das Abtastsignal empfängt und in der Folge eine zweite Radarantenne das Reflektionsradarsignal sendet, wobei die zweite Antenne nicht notwendigerweise dieselbe Position hat wie die erste Radarantenne.
Je nachdem, welcher Art das verwendete Abstandsradargerät ist, sind die Radarantennen für Empfang des Abtastradarsignals und Senden des Reflektionsradarsignals auf dem Prüfstand positioniert. Bei einer wichtigen Gruppe von Abstandsradargeräten, welche keine laterale Ablenkung des Abtastradarsignals verwenden, ist es unerheblich, wo die das Abtastradarsignal empfangende Radarantenne positioniert ist. Die erkannte Position des reflektierenden Hindernisses wird in guter Näherung die sein, die dem Einfallswinkel des empfangenen Reflektionsradarsignals entspricht. Bei anderen Arten von Abstandsradargeräten, die eine Ablenkung des Abtastradarsignals verwenden, muss die das Reflektionsradarsignal aussendende Radarantenne nicht notwendigerweise an der gleichen Position stehen, an der das Abtastradarsignal empfangen wird. Die erkannte Position des reflektierenden Hindernisses wird in guter Näherung die sein, die dem Winkel des ausgestrahlten Abtastradarsignals entspricht.

In einer alternativen Ausführungsform ist der Prüfstand so ausgestaltet, dass das Umgebungsmodell Daten über die Materialbeschaffenheit des Hindernisses umfasst und das durch die Radaremulationseinrichtung in Richtung des Abstandsradargeräts ausgesendete Reflektionsradarsignal so beschaffen ist, dass die Radaremulationseinrichtung die Materialbeschaffenheit des simulierten Hindernisses detektiert. Dem liegt die Erkenntnis zu Grunde, dass Radarsignale an Materialien mit verschiedener Materialbeschaffenheit, zum Beispiel metallischen Oberflächen oder hölzernen, mit unterschiedlicher Signaldämpfung reflektiert werden. Das macht man sich in dieser alternativen Ausführungsform zu Nutze, in dem bekannte Materialien typische charakteristische Dämpfungswerte zugeordnet und dem Abstandsradargerät bekannt gemacht werden. Die Radaremulationseinrichtung erzeugt dann ein geeignetes Reflektionsradarsignal mit der zum zu simulierenden Material passenden charakteristischen Dämpfung. Das Abstandsradargerät ist dann in der Lage, aus der gemessenen Dämpfung auf die Materialbeschaffenheit zu schließen.

In einer weiteren Variante des Prüfstands zum Test eines Abstandsradargeräts zur Entfernungs- und Geschwindigkeitsbestimmung von Hindernissen ist die Radaremulationseinrichtung mit dem Abstandsradargerät in einem geschlossenen Regelkreis so verbunden, dass das Hindernis in Echtzeit simuliert werden kann, ein solcher Simulationsaufbau wird auch Hardware-in-the-Loop-Simulation genannt.

In einer alternativen Ausgestaltung des Prüfstands zum Test eines Abstandsradargeräts zur Entfernungs- und Geschwindigkeitsbestimmung von Hindernissen ist die Radaremulationseinrichtung so gestaltet, dass das Abtastradarsignal zunächst über wenigstens einen Umlenkspiegel zur Spiegelung von Radarwellen läuft bevor es von einer Radarantenne detektiert wird. Alternativ oder zusätzlich kann das Reflektionsradarsignal zunächst über wenigstens einen Umlenkspiegel zur Spiegelung von Radarwellen laufen, bevor es vom Abstandsradargerät detektiert wird. Hier ist auch eine Anordnung von mehreren ortsfesten oder beweglich angebrachten Spiegeln denkbar, die so installiert werden, dass die Anzahl der Radarantennen in der Radaremulationseinrichtung reduziert werden kann.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die laterale und die vertikale Erstreckung sind nicht maßstäblich und weisen, sofern nicht anders angegeben auch keine ableitbare geometrische Relationen zueinander auf. Darin zeigt:
- Figur 1: schematische Ansicht eines erfindungsgemäßen Prüfstands zum Test eines Abstandsradargeräts zur Entfernungs- und Geschwindigkeitsbestimmung von Hindernissen in einer ersten Ausführungsform
- Figur 2: schematische Ansicht eines erfindungsgemäßen Prüfstands in einer Ausführungsform mit Radarantennen in verschieden Höhen in seitlicher Ansicht
- Figur 3: schematische Ansicht eines erfindungsgemäßen Prüfstands in einer Ausführungsform mit Anordnung von ortsfesten Radarantennen
- Figur 4: schematische Ansicht eines erfindungsgemäßen Prüfstands in einer Ausführungsform mit Anordnung von ortsfesten Radarantennen und einer beispielhaften Darstellung der Simulation eines Überholmanövers
- Figur 5: schematische Darstellung eines erfindungsgemäßen Prüfstands in einer Ausführungsform mit Anordnung von ortsfesten Radarantennen auf einer ebenen Fläche
- Figur 6: schematische Darstellung eines erfindungsgemäßen Prüfstands in einer Ausführungsform mit Anordnung von ortsfesten Radarantennen in einem hohlen Ellipsoid

Die folgende Beschreibung dient der Veranschaulichung einer beispielhaften Ausgestaltung der vorliegenden Erfindung, hat darüber hinaus jedoch keinen einschränkenden Charakter.

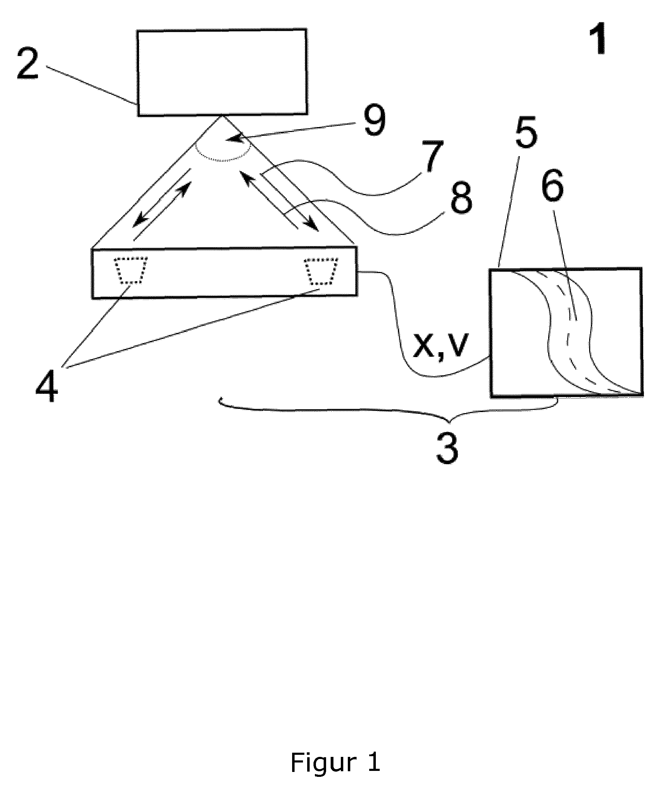

Figur 1 zeigt die schematische Darstellung eines Prüfstands 1 zum Test eines Abstandsradargeräts 2 zur Entfernungs- und Geschwindigkeitsbestimmung von Hindernissen. Gezeigt ist eine Radaremulationseinrichtung 3, die mindestens eine Radarantenne 4 und eine Computereinheit 5 mit einem Umgebungsmodell 6 umfasst. Das Umgebungsmodell 6 ist angedeutet durch eine stilisierte Straße, allerdings kann es zusätzlich zu einer Straßenumgebung bewegliche Verkehrsteilnehmer wie Fahrzeuge und unbewegliche Hindernisse enthalten. Das Umgebungsmodell 6 gibt Daten (x,v) für die relative Position und Geschwindigkeit eines Hindernisses in Bezug auf das Abstandsradargerät 2 vor. Nach Empfang eines Abtastradarsignals 7 ausgehend vom Abstandsradargerät 2 sendet die Radaremulationseinrichtung 3 basierend auf den Daten (x,v) ein geeignetes Reflektionsradarsignal 8 zumindest teilweise in Richtung des Abstandsradargeräts 2 aus. Dieses detektiert dann ein Hindernis mit der vorgegebenen relativen Position und Geschwindigkeit. Die Radaremulationseinrichtung 3 erstreckt sich so über einen Winkelbereich 9 vor dem Abstandsradargerät 2, dass auch mehrere Hindernisse mit relativer Position und Geschwindigkeit in diesem Winkelbereich 9 mit voneinander unterscheidbaren Winkeln simuliert werden kann, bzw. ein Hindernis mit lateraler Bewegung simuliert werden kann.

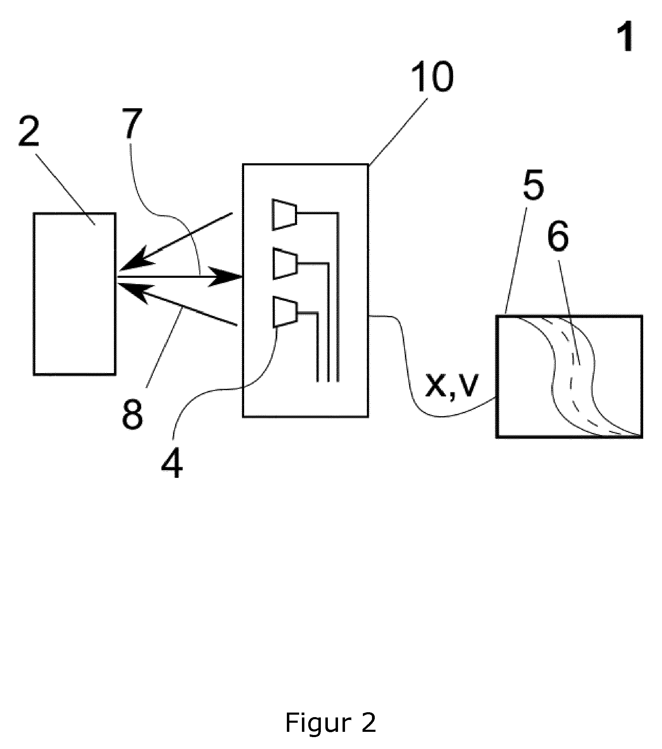

In Figur 2 ist eine seitliche Ansicht des Prüfstands 1 zum Test eines Abstandsradargeräts 2 zur Entfernungs- und Geschwindigkeitsbestimmung von Hindernissen dargestellt. In dieser Ausführungsform befinden sich die Radarantennen auf einem Positionierungssystem 10, hier nur durch einen Kasten angedeutet, wobei jede der Radarantennen 4 auf einer anderen Höhe geführt wird um gegenseitige Abschattung zur verhindern.

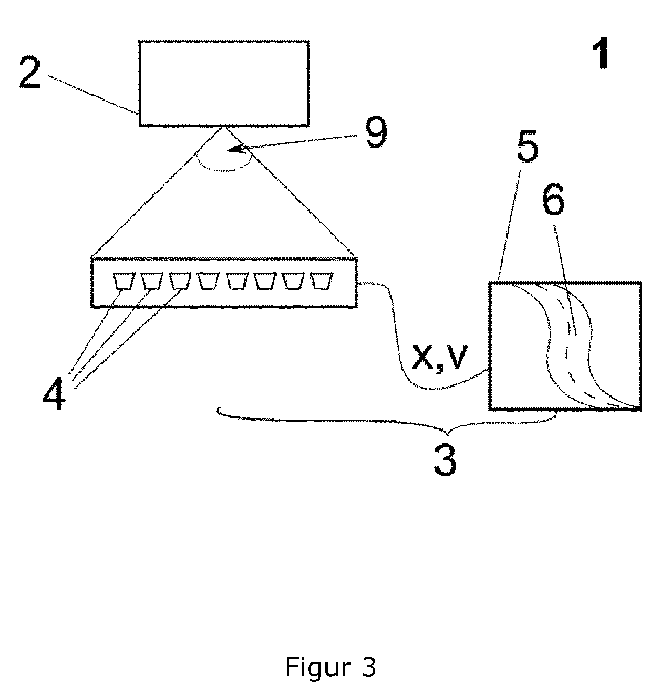

Eine weitere Ausführungsform des Prüfstands 1 zum Test eines Abstandsradargeräts 2 zur Entfernungs- und Geschwindigkeitsbestimmung von Hindernissen ist in Figur 3 dargestellt. In dieser Ausführungsform ist die Anordnung von mehreren ortsfesten Radarantennen 4 vorgesehen. Diese Anordnung deckt den erfindungsgemäßen Winkelbereich 9 ab. In dieser beispielhaften Anordnung ist vorgesehen, dass immer die ortsfesten Radarantennen 4 das zu simulierende Hindernis darstellen, die in dem Winkelabschnitt angeordnet sind in dem sich das zu simulierende Fahrzeug bezüglich des Abstandsradargeräts 2 befindet.

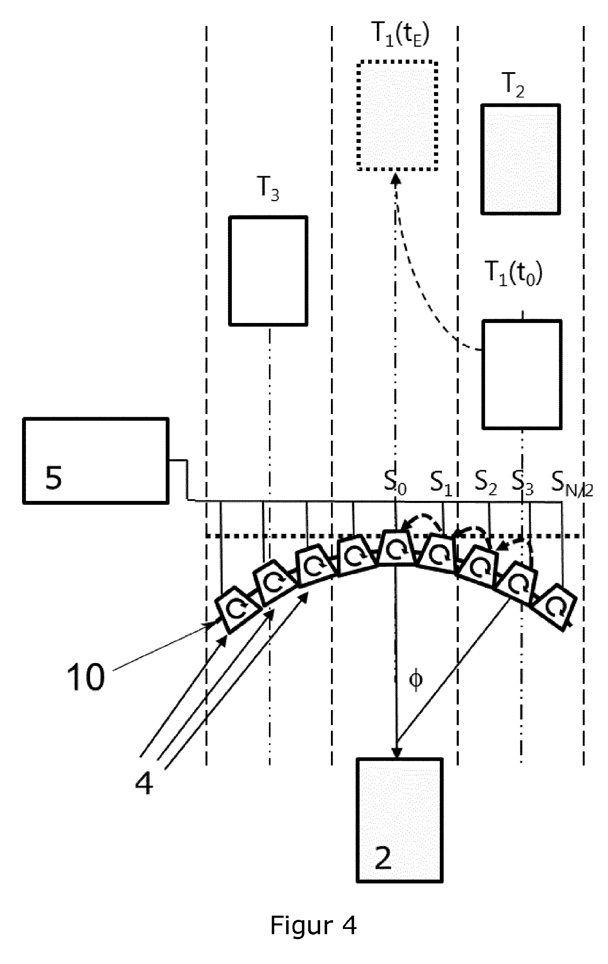

Figur 4 zeigt eine beispielhafte Darstellung des Prüfstands 1 zum Test eines Abstandsradargeräts 2 zur Entfernungs- und Geschwindigkeitsbestimmung von Hindernissen mit der Darstellung eines zu simulierenden Überholmanövers mit drei beteiligten Fahrzeugen T1, T2 und T3, die sich alle vor dem zu testenden Abstandsradargerät 2 befinden. Die Berechnung der relativen Position und Geschwindigkeit der simulierten Fahrzeuge wird durch die Radaremulationseinrichtung 3 durchgeführt. Die Ergebnisse sind schematisch angedeutet oberhalb der Anordnung der Radarantennen 4. Die dargestellte erfindungsgemäße Ausführungsform ist in diesem Fall eine Anordnung von ortsfesten Radarantennen 4 auf einer zum Abstandsradargerät 2 geöffneten konkaven Führungskontur. In diesem Beispiel wird jedes der drei Fahrzeuge T1, T2 und T3 jeweils durch die Radarantenne 4 dargestellt, die sich in dem azimutalen Winkel φ befindet, in dem sich das zu simulierende Fahrzeug momentan befindet. So wird das Fahrzeug T1(t₀) zum Zeitpunkt to zunächst durch Radarantenne S3 dargestellt, während des Überholmanövers geht die Zuständigkeit der Darstellung des Fahrzeugs über auf die Antenne S2, dann auf Antenne S1 und nach Abschluss des Überholmanövers auf S0 über. Nun ist das Fahrzeug in der gestrichelten Darstellung gezeichnet und mit T1(t_{E}) bezeichnet. Das zu erzeugende Reflektionsradarsignal geht dabei schrittweise von Radarantenne zu Radarantenne über (angedeutet durch die gepunkteten Pfeile).

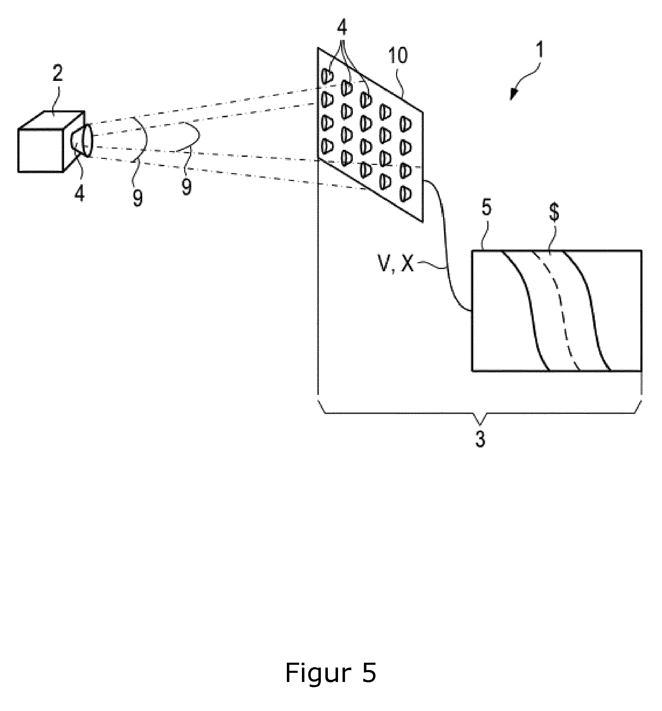

Figur 5 zeigt eine weitere Ausführungsform des Prüfstands 1 zum Test eines Abstandsradargeräts 2 zur Entfernungs- und Geschwindigkeitsbestimmung von Hindernissen. Hierbei umfasst der Prüfstand 1 ein Positionierungssystem 10 in Form einer ebenen Fläche. Eine Vielzahl von Radarantennen 4 ist auf der ebenen Fläche angebracht und ermöglichen eine hohe räumliche Auflösung der für das zu testende Abstandradargerät 2 simulierten Szene, welche durch das Umgebungsmodell 6 auf der Computereinheit vorgegeben und durch die Radarantennen 4 abgebildet wird. Die mit den Radarantennen 4 bestückte ebene Fläche ist auf das zu testende Abstandsradargerät 2 ausgerichtet und ermöglicht eine Abbildung von umgebenden simulierten Hindernissen mit Erstreckung in azimutaler und vertikaler Richtung (Winkel 9).

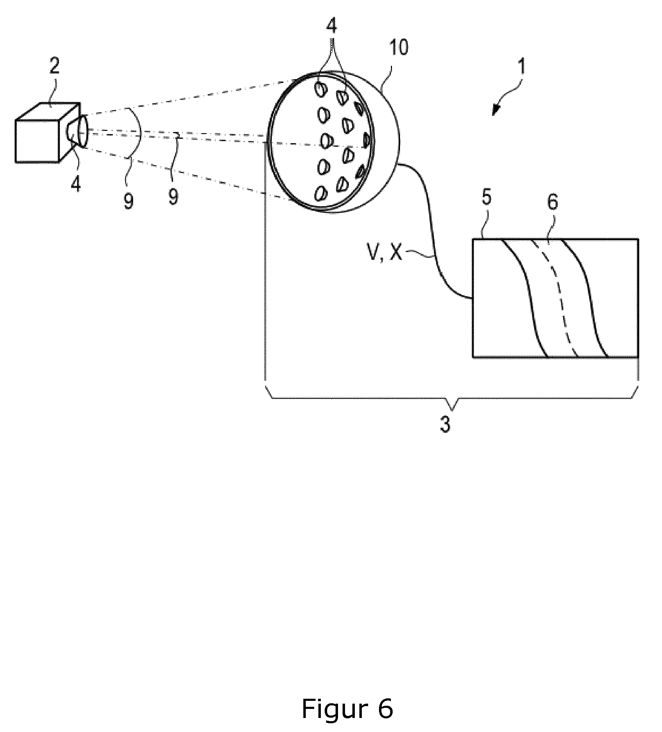

Figur 6 zeigt eine weitere Ausführungsform des Prüfstands 1 zum Test eines Abstandsradargeräts 2 zur Entfernungs- und Geschwindigkeitsbestimmung von Hindernissen. Hierbei umfasst der Prüfstand 1 ein Positionierungssystem 10 in Form des Teils eines hohlen Ellipsoids, beispielsweise einer hohlen Teilkugel. Eine Vielzahl Radarantennen 4 ist auf der Innenseite des hohlen Ellipsoids angebracht und ermöglichen eine hohe räumliche Auflösung der für das zu testende Abstandradargerät 2 simulierten Szene, welche durch das Umgebungsmodell 6 auf der Computereinheit vorgegeben und durch die Radarantennen abgebildet wird. Die Öffnung des Ellipsoids ist auf das zu testende Abstandsradargerät 2 ausgerichtet und ermöglicht eine Abbildung von umgebenden simulierten Hindernissen mit Erstreckung in azimutaler und vertikaler Richtung (Winkel 9).

## Patentansprüche

1. Prüfstand (1) zum Test eines Abstandsradargeräts (2) zur Entfernungs- und Geschwindigkeitsbestimmung von Hindernissen, umfassend
eine Radaremulationseinrichtung (3) mit mindestens einer Radarantenne (4) und einer Computereinheit (5) mit einem Umgebungsmodell (6), wobei das Umgebungsmodell (6) Daten (x,v) mindestens eines Hindernisses mit einer relativen Position und Geschwindigkeit zum Abstandsradargerät umfasst,
wobei die Radaremulationseinrichtung (3) nach Empfang eines Abtastradarsignals (7) von dem Abstandsradargerät (2) ein geeignetes Reflektionsradarsignal (8) basierend auf der durch das Umgebungsmodell (6) vorgegebenen relativen Position und Geschwindigkeit zumindest teilweise in Richtung des Abstandsradargeräts (2) aussendet, sodass das Abstandsradargerät (2) ein Hindernis mit der vorgegebenen relativen Position und Geschwindigkeit detektiert,
**dadurch gekennzeichnet, dass**
sich die Radaremulationseinrichtung (3) über einen Winkelbereich (9) vor dem Abstandsradargerät (2) erstreckt, so dass das Hindernis mit relativer Position und Geschwindigkeit in diesem Winkelbereich (9) mit voneinander unterscheidbaren Winkeln simuliert werden kann, und
dass die Radaremulationseinrichtung (3) eine Vielzahl von ortsfesten Radarantennen (4) umfasst, die über den Winkelbereich verteilt sind.

2. Prüfstand (1) nach Anspruch 1, **dadurch gekennzeichnet, dass** der azimutale Anteil der Position des simulierten Hindernisses durch die azimutale Position der detektierenden Radarantenne (4) der Radaremulationseinrichtung (3) und der vertikale Anteil der Position des simulierten Hindernisses durch die vertikale Position der detektierenden Radarantenne (4) der Radaremulationseinrichtung (3) abgebildet wird.

3. Prüfstand (1) nach Anspruch 1 oder 2, **dadurch gekennzeichnet, dass** der azimutale Anteil der Position des simulierten Hindernisses durch die azimutale Position der das Reflektionsradarsignal (8) sendenden Radarantenne (4) der Radaremulationseinrichtung (3) und der vertikale Anteil der Position des simulierten Hindernisses durch die vertikale Position der das Reflektionsradarsignal (8) aussendenden Radarantenne (4) der Radaremulationseinrichtung (3) abgebildet wird.

4. Prüfstand (1) nach Anspruch 2 oder 3, **dadurch gekennzeichnet, dass** die Anzahl der Radarantennen (4) so gewählt ist, dass eine vorgegebene Winkelauflösung erzielbar ist.

5. Prüfstand (1) nach einem der Ansprüche 1-4, **dadurch gekennzeichnet, dass** die Vielzahl Radarantennen (4) auf einer geradlinig verlaufenden Kontur angeordnet sind.

6. Prüfstand (1) nach einem der Ansprüche 1-4, **dadurch gekennzeichnet, dass** die Vielzahl Radarantennen (4) auf einer konkaven Kontur (11) mit Öffnung in Richtung des Abstandsradargeräts (2) angeordnet sind.

7. Prüfstand (1) nach einem der Ansprüche 1-6, **dadurch gekennzeichnet, dass** eine erste Radarantenne (4) das Abtastsignal empfängt und in der Folge eine zweite Radarantenne (4) das Reflektionsradarsignal (8) sendet.

8. Prüfstand (1) nach einem der Ansprüche 1-7, **dadurch gekennzeichnet, dass** das Umgebungsmodell (6) Daten über die Materialbeschaffenheit des Hindernisses umfasst und das durch die Radaremulationseinrichtung (3) in Richtung des Abstandsradargeräts (2) ausgesendete Reflektionsradarsignal (8) so beschaffen ist, dass die Radaremulationseinrichtung (3) die Materialbeschaffenheit des simulierten Hindernisses emuliert, insbesondere indem der Materialbeschaffenheit des zu simulierenden Hindernisses eine vorbestimmte charakteristische Dämpfung des Reflektionsradarsignals (8) zugeordnet wird.

9. Prüfstand (1) nach einem der Ansprüche 1-8, **dadurch gekennzeichnet, dass** die Radaremulationseinrichtung so gestaltet ist, dass das Abtastradarsignal (7) zunächst über wenigstens einen Umlenkspiegel zur Spiegelung von Radarwellen läuft bevor es von einer Radarantenne (4) detektiert wird, oder dass das Reflektionsradarsignal (8) zunächst über wenigstens einen Umlenkspiegel zur Spiegelung von Radarwellen läuft bevor es vom Abstandsradargerät (2) detektiert wird.

10. Prüfstand (1) nach einem der Ansprüche 1-9, **dadurch gekennzeichnet, dass** die Radaremulationseinrichtung in einem geschlossenen Regelkreis so mit dem Abstandsradargerät (2) verbunden ist, dass das Hindernis in Echtzeit simuliert werden kann.
